(19) Europäisches Patentamt
European Patent Office
Office européen des brevets

(11) **EP 2 183 652 B1**

(12) **EUROPÄISCHE PATENTSCHRIFT**

(45) Veröffentlichungstag und Bekanntmachung des Hinweises auf die Patenterteilung:
**01.12.2010 Patentblatt 2010/48**

(21) Anmeldenummer: **08785346.1**

(22) Anmeldetag: **05.08.2008**

(51) Int Cl.:
*G05B 19/4069* (2006.01)     *G05B 19/416* (2006.01)

(86) Internationale Anmeldenummer:
**PCT/EP2008/006419**

(87) Internationale Veröffentlichungsnummer:
**WO 2009/027006 (05.03.2009 Gazette 2009/10)**

(54) **VERFAHREN ZUR OPTIMIERTEN BEWEGUNGSKOORDINATION VON MESS- ODER WERKZEUGMASCHINEN MIT REDUNDANTEN TRANSLATORISCH WIRKSAMEN ACHSEN**

METHOD FOR THE OPTIMIZED MOVEMENT COORDINATION OF MEASURING MACHINES OR MACHINE TOOLS HAVING REDUNDANT TRANSLATORY AXES

PROCÉDÉ POUR OPTIMISER LA COORDINATION DE MOVEMENT SUR DES MACHINES DE MESURE OU DES MACHINES-OUTILS PRÉSENTANT DES AXES REDONDANTS À EFFET TRANSLATOIRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.08.2007 DE 102007040022**

(43) Veröffentlichungstag der Anmeldung:
**12.05.2010 Patentblatt 2010/19**

(73) Patentinhaber: **TRUMPF Werkzeugmaschinen GmbH + Co. KG**
**71254 Ditzingen (DE)**

(72) Erfinder: **Ehlerding, Andreas**
**30926 Seelze (DE)**

(74) Vertreter: **Kohler Schmid Möbus Patentanwälte**
**Ruppmannstraße 27**
**70565 Stuttgart (DE)**

(56) Entgegenhaltungen:
EP-A- 0 594 699          DE-A1-102004 019 653
DE-A1-102005 061 570     US-A- 5 801 939

**Beschreibung**

**Technisches Gebiet und Stand der Technik**

In der Entwicklung von Mess- und Werkzeugmaschinen kommt es zunehmend zum Einsatz von redundanten translatorisch wirksamen Achsen, also Achsen, die aufeinander aufbauend oder gegeneinander wirksam, parallel im Raum zueinander bewegbar sind, wobei ein oder mehrere Zusatzachsen mit einem relativ kurzen Bewegungsspielraum auf oder gegenüber von Basisachsen, mit einem relativ langen Bewegungsspielraum angeordnet sind.

Solche redundant in gleicher Richtung überlagert bewegbare Achsen, bieten die Möglichkeit den größeren Bewegungsspielraum der Basisachsen mit den höheren Beschleunigungsmöglichkeiten kurzwegiger und damit leichter gebauter Zusatzachsen, in einem kontinuierlichen Bewegungsablauf einer Messeinrichtung oder eines Werkzeuges, relativ zu einem Mess- oder Bearbeitungsgut, zu kombinieren.

Ein Beispiel für ein derartiges Konzept ist das Patent EP 594 699 B1 (Ehlerding). In besagtem Patent wurde vorgeschlagen, parallel ausgerichtete überlagert wirksame Achsanordnungen zu nutzen, um die hohe Beschleunigung leichter kurzwegiger Achsen im gesamten Arbeitsbereich weniger beschleunigbarer, langwegiger Achsen, in solchen Werkzeugmaschinen zu ermöglichen, die vorzugsweise für eine Bearbeitung von flächigen oder flachen Werkstücken in zwei oder drei orthogonal zueinander ausgerichteten Achsen ausgelegt sind.

Aus dieser Veröffentlichung ist bekannt, dass hier als Zusatzachsen bezeichnete kürzere Teilachsen von einem über dem Material bewegbaren Portal mit einer die Zusatzachsen tragender Bewegungseinheit, die sich wiederum an dem Portal entlang bewegt, getragen sein können, oder mittels Basisachsen auch das Material bewegt werden kann, wobei sich ein Werkzeug mittels Zusatzachsen nochmals unabhängig von der Bewegung durch die Basisachsen, gegenüber dem Material bewegen kann. Genauso ist auch vorstellbar ein oder mehrere Zusatzachsen, die ein Werkzeug tragen, an einem festen Portal entlang, als einer Basisachse, über das Material zu bewegen, während das Material mittels einer weiteren orthogonal zum Portal orientierten Basisachse unter dem Portal entlang bewegt wird.

Allgemein ist bekannt, dass anstatt eines Portals auch eine Traverse oder ein bewegbarer oder stationärer Arm oder Ausleger mit bewegter oder stationärer Stütze als Träger von Zusatzachsen dienen kann und dass alle genannten Achskonfigurationen auch abweichend vom üblichen Fall, in dem die Basisachsen vorzugsweise die schweren Maschinenteile oder das schwere Mess- oder Bearbeitungsgut in der horizontalen Ebene bewegen, auch eine andere Orientierung im Raum besitzen können.

Statt der Messeinrichtungen oder Werkzeuge kann auch ein leichtes oder kleines Mess- oder Bearbeitungsgut durch die Zusatzachsen getragen und durch gemeinsame Bewegung von Basis- und Zusatzachsen entlang von Messeinrichtungen oder Werkzeugen geführt werden, ohne dass hierzu eine grundlegend andere Koordination erforderlich wäre.

Beispielsweise aus WO 2006/75209 A2 (Gattiglio et al) ist zudem bekannt, dass Zusatzachsen zwar physisch orthogonal zueinander ausgerichtet sind, und sich gemeinsam in einer Ebene bewegen, die an zwei Basisachsen ausgerichtet ist, jedoch so, dass die physischen Zusatzachsen in dieser Bewegungsebene nicht parallel zu den Basisachsen ausgerichtet sind, beispielsweise, wie in WO 2006/75209 A2, um 45° gegenüber den Basisachsen in der gemeinsamen Bewegungsebene gedreht.

Eine redundante, parallel ausgerichtete Wirkung der Achsen ist grundsätzlich auch hier leicht zu implementieren, da die hierzu notwendige feste Transformation zwischen den Ausrichtungen von zwei an den physischen Achsrichtungen orientierten kartesischen Koordinatensystemen, mittels simpelster konstant wirkender analoger, digitaler oder computertechnisch berücksichtigter Multiplikationselemente, problemlos auch für den durchschnittlichen Fachmann vorzusehen ist.

Weiterhin ist aus dem Stand der Technik bekannt, dass anstelle linear bewegter Zusatzachsen, auch der Einsatz rotorisch um einen meist geringen Winkelbetrag bewegbarer Einrichtungen möglich ist, so dass mittels eines ausreichenden Abstandes zwischen Drehpunkt und Mess- oder Bearbeitungspunkt, eine ausreichend angenähert lineare Bewegung der für die Messung oder Bearbeitung relevanten Elemente einer Messeinrichtung oder eines Werkzeuges entsteht.

Eine Variante hiervon wird genutzt, wenn gebündelte Strahlungsenergie, meist ein Laserstrahl, mittels schwenkbarer Spiegel oder anderer Ablenkungselemente auf eine Bearbeitungsstelle gelenkt wird.

Zusatzachsen in diesem Sinne werden beispielsweise in dem Dokument WO 96/29634 A1 (Cutler et al) ausführlich behandelt, siehe illustrativ hierzu besonders Fig. 2 und Fig. 4 dort.

Ähnliche mechanische Verhältnisse betreffend der Zusatzachsen sind auch für andere Werkzeuge denkbar, beispielsweise rotierbare Fräsköpfe, oder entsprechende Messeinrichtungen, wobei oft zusätzlich eine Bewegung längs der Werkzeug- oder beispielsweise einer Messtasterachse möglich ist, auch zur Kompensation der Abweichung von einer zur jeweiligen Basisachse exakt parallelen Bewegung.

In der Patentschrift EP 1 294 544 B1 (Sartorio) wird eine weitere Konfiguration gezeigt und als eine Neuerung gegenüber dem früheren Stand der Technik eine zweiachsig linear bewegbare parallelkinematische Zusammenfassung der hoch beschleunigbaren Zusatzachsen gelehrt, was insbesondere zu dem Vorteil führt, dass in beiden horizontalen Hauptbewegungsrichtungen einer derart realisierten Maschine insoweit vergleichbare kinematische Verhältnisse herrschen, was die Effizienz einer zweidimensionalen Werkzeugbewegung verbessern kann.

Über die praktische Koordination der simultan betriebenen Achsen wird jedoch wenig offenbart. Lediglich einige wesentliche Rahmenbedingungen werden genannt, die bei der Koordination der Teilachsen gelten sollen.

Ab Satz [24] bis Satz [39] der Beschreibung und im Hauptanspruch wird im Patent EP 1 294 544 B1 hierzu etwas ausgeführt.

Insbesondere wird für wichtig gehalten (ab Satz [36] der Beschreibung), dass die Basisachsen sich wesentlich schneller bewegen können, als die höchste Bearbeitungsgeschwindigkeit.

Dies soll bewirken, dass im Verlauf einer simultanen Gesamtbewegung, nach einem hoch beschleunigten Voreilen der Zusatzachsen und vor einer neuerlichen hohen Beschleunigung, die Basisachse wieder aufholen kann und somit die Zusatzachse sich nicht vor der nächsten Bewegung schon am Rand ihres maximalen Bewegungsbereiches befindet, so dass weitere hoch beschleunigte koordiniert simultane Bewegungen nicht mehr, oder nicht ausreichend, möglich wären und es so zu unerwünschten Diskontinuitäten, besonders bei einer mehrdimensionalen Bewegung des Werkzeuges, kommen könnte.

Wie nun aber eine überlagerte Bewegung der Teilachsen tatsächlich koordiniert werden soll, darüber findet sich in EP 1 294 544 B1 keine weitere Information.

Offenbar auf dieser noch unvollständigen Lehre aufbauend, wird in EP 1 758 003 A1 (Cardinale et al) zunächst eine Koordination der Achsen vorgeschlagen, die nach dem Prinzip der inversen Kinematik die redundanten Freiheitsgrade einer Bewegungsmechanik durch Anwendung einer speziellen Form der sogenannten Jacobi-Matrix in optimierter Weise nutzbar machen soll. Alle Bemerkungen hierzu sind so allgemein gehalten, dass nicht deutlich wird, auf welche Weise einschränkende Bedingungen hierbei zu einem konkret nutzbaren Verfahren zur Optimierung der Bewegungskoordination bei translatorisch redundant wirksamen Achskonfigurationen, bezüglich einer konstant einzuhaltenden hohen Geschwindigkeit führen könnte.

In der weiteren Beschreibung, den Beispielen und Patentansprüchen wird hierzu dann auch kein konkreter Bezug mehr hergestellt.

Soweit dies dazu dienen sollte, um damit die Anwendbarkeit der beanspruchten Erfindung auch für komplexer konfigurierte Systeme anzudeuten, beispielsweise auch für rotatorische Achsen, oder auch redundant wirksame rotatorische Achsen, so ist dies jedoch nicht in einer Weise geschehen, die - ohne weitere umfangreiche Untersuchung oder erfinderische Schritte - eine Anwendbarkeit überhaupt ermöglicht. Gegenüber dem bekannten Stand der Technik wird in den Ansprüchen tatsächlich auch nichts offenbart, was dem Fachmann nicht schon bekannt wäre, wie beispielsweise eine Bewegungsaufteilung auf redundant wirksame Achsen durch Filterung. Ansonsten wird noch wiederholt, was sinngemäß schon in EP 1 294 544 B1 zu lesen war: Die Maximalgeschwindigkeit der Basisachsen sollte deutlich höher gewählt sein, als die der Zusatzachsen.

(Siehe EP 1 758 003 A1, Beschreibung, Satz 32 und Anspruch 9)

Soweit überhaupt konkret nachvollziehbar, da auch unklar bleibt, wie nicht nur Beschleunigungs- oder Amplitudenanteile einer Bewegung, sondern gleich ganze Konturen oder einzelne Abschnitte "gefiltert" werden sollen, entspricht dies letztlich also dem Stand der Technik, beispielsweise aus EP 594 699 B1.

Von eben diesem Stand der Technik geht auch die deutsche Offenlegungsschrift DE 10 2005 061 570 A1 (Hoffmann et al) aus, die erstmals nach EP 594 699 B1 zugleich die Aufteilung der Bewegung, als auch den Bewegungsspielraum von Zusatzachsen explizit berücksichtigt.

Im Unterschied zum Grundansatz einer weitgehend beschleunigungsabhängigen Bewegungsaufteilung bei EP 594 699 B1, verfolgt DE 10 2005 061 570 A1 eine Aufteilungsstrategie die unabhängig vom Zeitablauf eine weitgehend gleichbleibende Aufteilung der Bewegungsanteile vorsieht, indem die Bewegung der Basisachsen als sogenannte "Grobbahn" entlang einer von der Zeit verschiedenen aber ebenfalls an der Bewegungsbahn skalar orientierten Größe durch Filterung mit Tiefpasscharakteristik erzeugt werden soll, wobei die Abweichung von der als "Anfangsbahn" bezeichneten Gesamtbewegungsbahn, niemals über den Bewegungsspielraum der Zusatzachsen hinausgehen soll.

Ein derartiger Ansatz ist jedoch als äußerst problematisch anzusehen, auch wenn die entsprechende Beschreibung zunächst eine Lösung des Koordinationsproblems zu suggerieren scheint.

Leider sind schon die Annahmen zur Begründung einer notwendigen Verbesserung des Standes der Technik nicht immer zutreffend.

Probleme des zu verbessernden bisherigen Standes der Technik werden in einer Beschreibung dargestellt, die Elemente enthält, die tatsächlich erst durch die dort beschreibene Erfindung eingeführt werden. Siehe Absätze [0010] und [0011] dort, wo neben der Einführung "eines von der Zeit verschiedenen skalaren Parameters" außerdem Vorgänge als Nachteil beklagt werden, die für die Erfindung ebenfalls gelten, da beispielsweise eine, nicht auf einen zitierten Stand der Technik sondern lediglich auf Annahmen basierende, Notwendigkeit zu iterativen Vorgehensweise zur Aufteilungsermittlung bei Überschreitung von Grenzwerten als Nachteil des Standes der Technik beschrieben wird, obwohl dies gerade in "besonders bevorzugten Ausführungen" der dort beschriebenen Erfindung extensiv genutz wird. Siehe beispielsweise Absatz [0020].

In Absatz [0014] werden Behauptungen aufgestellt, die einer näheren Untersuchung nicht standhalten: So heißt es zur Vorgehensweise in EP 0 594 699 B1, dass die Trennung der Bewegungsanteile "sehr rechenintensiv" wäre, "da für die gesamte Anfangsbahn der Beschleunigungsverlauf ermittelt werden muss".

Dieser ist jedoch ohnehin in jedem Fall früher oder später in einem entsprechenden Steuerungsverfahren zu ermitteln und keinesfalls eine sonderlich rechenintensive Operation, sondern mittels Grundrechenarten ohne jede Iteration ausführbar.

Zwar trifft die Anmerkung zu, "dass der mögliche Verfahrweg des hochdynamischen Antriebs, die mögliche Beschleunigung des niederdynamischen Antriebs und die maximale Bahngeschwindigkeit ... aufeinander abgestimmt" sein müssen, um eine weitere rechnerische Ermittlung einer Bewegungsaufteilung zu verhindern.

Nur trifft dies eben gundsätzlich zu. Wenn solche Bedingungen, die in der noch unveröffentlichten Patentanmeldung DE 10 2007 026 356.4 des Anmelders der vorliegenden Erfindung nochmals erheblich verfeinert aufgeführt sind, nicht eingehalten werden, muss immer mit einer Überschreitung von Grenzwerten gerechnet werden.

Ein Verfahren, das es erlaubt diese Grenzwerte in irgend einem Aspekt, ohne Detailuntersuchung an der Bewegungsbahn, auszudehnen, wird hierzu nicht ohne eine entsprechende Einschränkung in einem anderen Parameter auskommen.

Wenn also ein Verfahren angibt, durch Aufteilung einer gesamten Bewegungsbahn in einem Durchgang, mittels Errechnung eines einheitlichen Korrekturfaktors, alle Daten "passend" zu machen, so stellt sich nicht die Frage ob, sondern lediglich in welchen Aspekten die entsprechenden Einschränkungen erfolgen.

Diese Aufteilung der Bewegung anhand der Beschleunigungsanteile ist, völlig im Gegensatz zu den Annahmen von Hoffmann et al. nicht nur rechnerisch einfach zu bewältigen, sondern hat noch einen anderen Vorzug:

Den Zusatzachsen werden strikt nur die Bewegungsanteile zugeteilt, die von den Basisachsen physikalisch nicht zu bewältigen sind.

Anders ausgedrückt: Eine kleinere tatsächlich stattfindende Bewegung der Zusatzachsen ist bei angestrebter konstanter Maximalgeschwindigkeit physikalisch überhaupt nicht vorstellbar.

Indem man dieses feststehende Faktum einfach ignoriert und eine Bahn erzeugt, egal auf welche Weise, die als erstes Kriterium den Bewegungsspielraum der Zusatzachsen einhält, erzwingt dies, falls andernfalls überhaupt eine Überschreitung des besagten Bewegungsspielraumes stattfinden würde, mindestens in betroffenen Bahnabschnitten, eine überhöhte Beschleunigung der Basisachsen.

Beide Überschreitungen, sowohl des Spielraums der Zusatzachsen oder der maximalen Beschleunigung der Basisachsen, sind physikalisch nicht ausführbar und das alte Verfahren hat in diesem Fall den Vorteil für sich, dass genau nur dort "unausführbare" Situationen auftreten, an denen dies tatsächlich bei gegebener Geschwindigkeit unvermeidbar ist.

Bei einem Verfahren nach Hoffmann et al. können diese Situation auch an Stellen und bei Geschwindigkeiten auftreten, an denen kein physikalischer Zwang hierzu besteht, da das dort verwendete Verfahren "mit Tiefpasscharakteristik" eine Bahn erzeugt, die einer Bahn mit minimalem Zusatzachseneinsatz erst in umständlichen Zusatzoperationen überhaupt schrittweise annäherbar ist, womit der letzte behauptete Vorteil gegenüber den älteren Verfahren hinfällig wird.

Dabei kommt dann auch durch die Hintertür wieder die Berücksichtigung der Zeit als "skalarer Parameter" ins Spiel, was man doch eigentlich abschaffen wollte.

Wenn also die Zusatzachsen nach den älteren Verfahren ihre Grenzwerte erreichen, dann tun sie dies mindestens auch bei jedem anderen Verfahren zur "Vergröberung" der Bewegung der Basisachsen und gleicher angenommener Gesamtgeschwindigkeit. Wenn also statt dessen, mit einem, wie bei Hoffmann et al. beschriebenen Verfahren zur Ermittlung einer "Grobbahn" gearbeitet wird, so bedeutet dies zunächst vor allem, dass von vornherein nicht einmal geklärt ist, ob die Zusatzachsen überhaupt notwendige Bewegungen ausführen, oder - noch entscheidender - ob die Basisachsen unnötigerweise Bewegungen mit zu hoher Beschleunigung ausführen.

Je nach Auswahl der erfindungsgemäß genannten Parameter, Intervalle, Gewichtungen oder Teilmethoden können völlig unterschiedliche "Grobbahnen" entstehen, ohne dass erkennbar offenbart wäre, welche dieser zahlreichen Varianten mit einem klar abgrenzbaren Aufwand aus welchen Gründen, zu besonders vorteilhaften Bahnverläufen führen könnten.

Letztlich wird nicht offenbart, wie ein zumindest annähernd optimaler Bahnverlauf erzeugt werden kann, sondern es entsteht lediglich ein mehr oder weniger zufällig "verschliffener" Bahnverlauf, dessen einziges klares Kriterium die Nichtverletzung des Bewegungsspielraumes der Zusatzachsen darstellt.

Dabei ist es nur ein schwacher Trost, wenn man am Ende der Untersuchung der Gesamtbahn auf besonders einfache Weise einen Faktor ermittelt, um den man die Gesamtgeschwindigkeit zu senken habe, da dieser Faktor zwar eine ordnungsgemäße Bearbeitung erlauben mag, aber sicherlich nur selten annähernd zu einem denkbaren Optimum der Bewegungskoordination führt.

Dem kommt man nach Hoffmann et al. zwar entgegen, indem man auch die Unterteilung einer Bewegungsbahn in Abschnitte, die einzeln behandelt werden, vorsieht.

Allerdings ohne irgend einen Hinweis, nach welchen Kriterien und wie genau solche Abschnitte automatisch passend ermittelt werden und die resultierenden Geschwindigkeitsunterschiede in den einzelnen Abschnitten überbrückt werden sollen.

Im Übrigen würde dies auch nicht helfen, wenn man auf eine bestimmte, weitgehend konstant einzuhaltende, Bahngeschwindigkeit festgelegt ist.

Als besonders vorteilhaft zur Ermittlung der Grobbahn wird dort die Verwendung von Splines empfohlen, was jedoch zu dem Nachteil führt, dass eine erfindungsgemäße Vergröberung der Anfangsbahn mit den beschriebenen Methoden überhaupt nicht mehr entlang prismatischer Konturverläufe möglich wäre, da ein vereinfachter Abstandsvergleich mittels Stützpunkten gleicher Anzahl, zumindest in den dargestellten Verfahren, nicht über Ecken, als Endpunkten von Splines, hinweg möglich wäre, womit ein solches Verfahren für die meisten denkbaren Anwendungsfälle nicht geeignet wäre.

Ein Verfahren, das dies zuverlässiger im Sinne einer Optimierung, nur dort wo es auch notwendig ist, und dennoch weitaus weniger rechenintensiv erledigt, ist aus der weiteren noch unveröffentlichten Patentanmeldung DE 10 2007 027 503.1 des Anmelders der vorliegenden Erfindung bekannt.

In einer bevorzugten Ausgestaltung des dort beschriebenen Verfahrens, werden solche Bahnabschnitte, in denen es bei gegebener Geschwindigkeit zu einer Überschreitung des Bewegungsspielraumes der Zusatzachsen kommt, durch eine Bahnaufteilung verändert, die über eine geringere Beschleunigung der Zusatzachsen zu einer stärkeren Aufteilung der Bewegung zugunsten der Basisachsen führt, und somit an Stellen mit hohem Beschleunigungsbedarf auch zu entsprechenden Geschwindigkeitsrückgängen, wobei schon ohne jede iterative oder sonstige stufenweise Annäherung von Aufteilungsmöglichkeiten ein hoher Optimierungsgrad erreicht wird, inbesonders im Sinne einer Minimierung der Abschnitte mit verminderten und schwankenden Geschwindigkeiten.

Obwohl in dieser Hinsicht das Verfahren nach Hoffman et al. weitaus ineffizienter ist als die genannten Vergleichsverfahren, besonders weil

- zahlreiche Probeschritte zur Annäherung an eine nutzbare Grobbahn notwendig sind
- und dennoch kein Abbruchkriterium existiert, das eine zumindest annähernd optimal geeignete Bahn anzeigt,

muss dies dennoch nicht bedeuten, dass schon der Grundgedanke falsch wäre, und zwar einen Bahnverlauf für die Basisachsen zu erzeugen, der unabhängig von der Geschwindigkeit besonders effizient nutzbar ist, also eine Art "Ideallinie" für Basisachsen, in Bezug auf die jeweilige Sollkontur.

Die Frage stellt sich allerdings, ob ein derartiger von der Geschwindigkeit und damit auch von der Zeit unabhängiger optimaler Bahnverlauf überhaupt existieren kann.

Bei der beschleunigungsabhängigen Bewegungsaufteilung kommt es zu einer Minimierung des Anteiles der Zusatzachsenbewegung.

Beispielsweise bedeutet dies, dass soweit alle notwendigen Beschleunigungen im Rahmen eines Bewegungsverlaufes unterhalb der Aufteilungsschwelle liegen, sich die Zusatzachsen gar nicht bewegen, selbst wenn sie aufgrund ihres Bewegungsspielraumes den gesamten Bewegungsablauf ausführen könnten.

Es versteht sich von selbst, dass eine Bewegungsaufteilung, die bei niedrigen Geschwindigkeiten mit kleinen Bewegungsanteilen der Zusatzachsen auskommt, bei höheren Geschwindigkeiten nicht mehr verwendbar ist.

Umgekehrt könnte man an eine Aufteilung der Bewegung denken, die bei hohen Geschwindigkeiten passend ist, und die daher auch bei einer niedrigeren Ausführungsgeschwindigkeit funktionieren müsste.

Zu beachten ist hierbei jedoch ebenfalls, wie schon aus dem Stand der Technik bekannt, "dass der mögliche Verfahrweg des hochdynamischen Antriebs, die mögliche Beschleunigung des niederdynamischen Antriebs und die maximale Bahngeschwindigkeit ... aufeinander abgestimmt" sein müssen.

"Mindestens" wäre noch hinzuzufügen, da auch die maximale Bewegungsgeschwindigkeit der hochdynamischen Antriebe und streng genommen auch deren Beschleunigungsvermögen hierbei eine Rolle spielt, wie ebenfalls schon im und zum Stand der Technik beschrieben wurde.

Aus dem Stand der Technik ist daher auch bekannt, dass für jede derartige Maschine eine Maximalgeschwindigkeit existiert, mit der sie ganz sicher jede beliebige Geometrie mit der maximalen Beschleunigung der Zusatzachsen abfahren kann.

Dieses Faktum wurde in dem schon genannten Aktenzeichen DE 10 2007 026 356.4 auf Seite 13 ab Zeile 9 dazu genutzt, um durch zur jeweilig geplanten Mess- oder Bearbeitungsgeschwindigkeit passendes Absenken der Beschleunigung der Basisachsen, deren notwendigen Bewegungsanteil entsprechend einzuschränken.

Jedoch hat dieses Verfahren den Nachteil, dass es zwar für jede Geometrie nutzbar ist, jedoch auch dann zu einer Absenkung der Maximalgeschwindigkeit führt, wenn die jeweilig abzufahrende Geometrie gar keine derart kritischen Bewegungsabläufe erfordert, wie sie in den bekannten Gleichungen hierzu vorgesehen sind.

In dem ebenfalls schon genannten Aktenzeichen DE 10 2007 027 503.1 wird desweiteren, wie schon erwähnt, ein Verfahren vorgeschlagen, das nur solche Bahnabschnitte, in denen es bei gegebener Geschwindigkeit zu einer Überschreitung des Bewegungsspielraumes der Zusatzachsen kommt, in der Bewegungsaufteilung entsprechend modifiziert wird (Anspruch 12 dort) oder eine Verminderung der Geschwindigkeit, mindestens für einzelne Abschnitte, vorgenommen wird, so dass es, unter anderem, nicht zu einer Überschreitung des Bewegungsspielraumes der Zusatzachsen kommen würde (Anspruch 15 dort). Jedoch ist dort wiederum an die pauschale Reduzierung der Geschwindigkeit, anhand der schon oben erwähnten Regeln aus dem Stand der Technik gedacht.

**Aufgabe der vorliegenden Erfindung** ist es daher, ein Verfahren zu offenbaren, das auf möglichst effektive Weise eine weitgehend konstant einzuhaltende Maximalgeschwindigkeit für jede spezielle Mess- oder Bearbeitungsbahn oder Abschnitte hiervon ermittelt, für Maschinen mit redundanten translatorisch wirksamen Achsen, ohne die Beschleunigung der höher beschleunigbaren Zusatzachsen zu begrenzen.

Der Bewegungsanteil der weniger beschleunigbaren Basisachsen, der sich für diese Maximalgeschwindigkeit ergibt, sollte sodann in Weiterbildungen der Erfindung als Bahnverlauf für die Basisachsen, unabhängig vom Zeitverlauf, bei niedrigeren Geschwindigkeiten verwendet werden, oder die Beschleunigung der Basisachsen kann entsprechend für niedrigere Geschwindigkeiten jeweils passend begrenzt werden, so dass in jedem Fall eine Bewegungsaufteilung zwischen Basis- und Zusatzachsen mit einem besonders niedrigen Bewegungsanteil der Basisachsen resultiert.

**Beschreibung der Erfindung**

Um eine weitgehend konstant einzuhaltende Maximalgeschwindigkeit für jede spezielle Mess- oder Bearbeitungsbahn, oder Abschnitte hiervon, auf besonders effektive Weise zu ermitteln, für Maschinen mit redundanten translatorisch wirksamen Achsen, ohne die Beschleunigung der höher beschleunigbaren Zusatzachsen zu begrenzen, wird erfindungsgemäß zunächst eine Simulation der Bearbeitungsbahn oder eines Abschnittes mit einer ersten Referenzgeschwindigkeit ausgeführt, die vorzugsweise, aber nicht zwingend der Maximalgeschwindigkeit entspricht, die sich aus den hierzu bekannten Gleichungen aus dem Stand der Technik ergeben kann, beispielsweise $Vref = SQRT(Sz * Bb / 4)$, wobei Vref für die höchstmögliche weitgehend konstante Mess- oder Bearbeitungsgeschwindigkeit - die besagte Referenzgeschwindigkeit - Sz für den Bewegungsspielraum der jeweiligen Zusatzachse, Bb für die maximale Beschleunigung der Basisachse und SQRT für Quadratwurzel steht.

Dabei erfolgt die Simulation vorzugsweise derart, dass die Trennung der Bewegungsanteile der Basis- und Zusatzachsen, anhand der jeweilig sich lokal ergebenden Beschleunigung stattfindet, indem die Zusatzachse nur den Bewegungsanteil ausführt, den die Basisachse aufgrund ihrer maximalen Beschleunigung nicht auszuführen in der Lage wäre.

Bei dieser Simulation erfolgt völlig unabhängig von der gewählten besagten Referenzgeschwindigkeit zunächst keine Berücksichtigung der Grenzen des Bewegungsspielraumes der Zusatzachsen, sondern diese Werte werden nur auf ihre positiven und negativen Maxima hin ausgewertet, wobei der höchste absolute Maximalwert die maximale Auslenkung der jeweiligen Zusatzachse angibt.

Das Verhältnis dieser maximalen Auslenkung zur tatsächlichen Auslenkbarkeit der Zusatzachse kann nun genutzt werden, um zu ermitteln, wie hoch die maximale weitgehend konstante Geschwindigkeit für diese spezielle Mess- oder Bearbeitungsbahn, oder einen jeweilig untersuchten Abschnitt, gewählt werden kann. Die benötigte Auslenkung Sz hängt in der Nähe des hier interessierenden Geschwindigkeitsbereiches in guter Näherung im Quadrat von der gewählten Geschwindigkeit ab, also beispielsweise analog der obigen Formel $Sz = Sfakt * 4 Vmax^2 / Bb$, wobei Sfakt für das Verhältnis steht, zwischen ermittelter und maximal zu erwartender Auslenkung, also $Sfakt = Sz\_ref\_max / (4 Vref^2 / Bb)$. Dies ergibt die nutzbare Geschwindigkeit $Vmax = Vref * SQRT(Sz / Sz\_ref\_max)$. Es versteht sich von selbst, dass jeweils der niedrigste Wert, aus den derart ermittelten Werten aller relevanten Bewegungsachsen, bestimmend für die Gesamtbewegung ist.

Mit der derart ermittelten maximalen Geschwindigkeit, kann dann entweder direkt eine Messung oder Bearbeitung mit höchstmöglicher Geschwindigkeit ausgeführt werden, ohne dass die Beschleunigung der Zusatzachsen eingeschränkt werden müsste, oder

es wird nochmals die Bahn mit dieser Maximalgeschwindigkeit simuliert, wobei zugleich eine Kontrolle auf Verletzungen von Grenzwerten der Zusatzachsen oder eine unnötige Unterschreitung der Grenzwerte, sowie ggf. eine entsprechende Korrektur und Wiederholung der Simulation erfolgen kann, bevor es zu einer Ausführung der Messung- oder Bearbeitung kommt, oder

die sich hieraus ergebende Bewegung aller Achsen wird in ihrem jeweiligen Verlauf, beispielsweise in einer ausreichend feinen Rasterung, abgespeichert, derart, dass die ermittelten Bewegungsanteile von mindestens zwei der drei Bewegungsabläufe der Basis- oder Zusatzachsen oder der Gesamtbewegung, korrespondierend abrufbar bleiben, so dass sich hierdurch eine Bewegungsaufteilung zwischen Basisachsen und Zusatzachsen unabhängig von der jeweilig zur Ausführung gewählten Geschwindigkeit ergibt, mit einem möglichst hohen Bewegungsanteil der Zusatzachsen.

Diese letzte Vorgehensweise hat jedoch, genau wie das zum Stand der Technik behandelte Verfahren nach Hoffmann et al. den Nachteil, dass durch die zwar hohe aber dennoch begrenzte Beschleunigung der Zusatzachsen bei einer zeitlichen Skalierung des Bewegungsablaufes nach unten, die begrenzte Beschleunigung der Zusatzachsen ebenfalls entsprechend vermindert wird, so dass ein entscheidender Vorteil der Zusatzachsen, ihre extrem kurzen Beschleunigungswege, besonders bei weniger hohen Sollgeschwindigkeiten, weitgehend verloren geht.

Besser geeignet erscheint daher die Möglichkeit, durch das Verhältnis einer geplanten Sollgeschwindigkeit zur oben ermittelten Maximalgeschwindigkeit und der für die Maximalgeschwindigkeit verwendeten Beschleunigung der Basisachsen, eine minimal notwendige Maximalbeschleunigung der Basisachsen zu ermitteln, bei deren Verwendung sich ebenfalls eine Bewegungsaufteilung mit einem ähnlich reduzierten Anteil der Basisachsen ergibt, jedoch ohne den Nachteil, dass die Beschleunigung der Zusatzachsen entsprechend herunterskaliert wird.

Eine einfache Ermittlung der passenden Maximalbeschleunigung der Basisachsen, ist beispielsweise durch Ableitung von $Bbsoll = Bbmax * Vsoll^2 / Vmax^2$ aus den obigen Gleichungen möglich, wobei das Bb von oben wegen der besseren Verständlichkeit hier als Bbmax bezeichnet wird.

Bei allen hier aufgeführten Gleichungen ist zu berücksichtigen, dass sie jeweils nur den einfachsten Weg zur Ermittlung der entsprechenden Werte darstellen, die durchaus, je nach Details von zusätzlich eingesetzten Verfahren zur Optimierung der Bewegungskoordination, entsprechend angepasst werden müssen.

Diese Werte können auch durch mehrfache Simulation bei schrittweiser Annäherung an die Optimalwerte ermittelt werden, was jedoch nichts an dem grundsätzlichen Verfahren ändert. Auch hierbei können als Anfangswerte die aus den Formeln ermittelten Werte dienen, wodurch eine stufenweise Annäherung abgekürzt werden kann. Da es jedoch bei dem Ziel der Erfindung in den meisten Einsatzszenarien keinesfalls um Verbesserungen im Promillebereich, sondern um eine grundsätzlich veränderte Bewegungsaufteilung handelt, reicht gewöhnlich eine einzige Simulation bei der besagten Referenzgeschwindigkeit und ein Einsatz der durch Formeln ermittelten Werte für Vmax und Bb völlig, um den Großteil der überhaupt möglichen Verbesserungen zu erzielen.

Auch der Einsatz von Sicherheitsfaktoren oder empirisch ermittelten Korrekturtabellen für derart ermittelte Werte kann eine sinnvolle Alternative zu den ohnehin selten notwendigen Annäherungsverfahren sein und ist üblicherweise völlig ausreichend um einen sehr hohen Optimierungsgrad bei hoher Anwendungssicherheit zu erreichen.

Wenn das Verfahren nicht einheitlich auf den kompletten Bewegungsablauf zu einer vollständigen Messung oder Bearbeitung wirkt, sondern auf einzelne Abschnitte, beispielsweise um unterschiedliche Geschwindigkeitspotentiale in verschiedenen Abschnitten zu nutzen, ist zunächst danach zu unterscheiden ob die Abschnitte jeweils isoliert ausführbare Teile des gesamten Bewegungsablaufes sind, oder auch ineinander übergehende Abschnitte berücksichtigt werden sollen.

Im ersten Fall, kann für jeden isolierbaren Abschnitt eines der schon beschriebenen Verfahren zum Einsatz kommen, mit ihrem jeweiligen Ergebnis für Vmax oder Bb.

Bei Berücksichtigung mehrerer Abschnitte, die zusammen einen isolierbaren Bewegungsablauf bilden, scheint es am naheliegendsten die Abschnitte anhand von Ecken im Bewegungsablauf voneinander abzugrenzen, da in einer Ecke selbst ein Geschwindigkeitsnullpunkt in allen Achsen vorliegen sollte, und somit keine besonderen Schwierigkeiten dabei bestehen dürften, hier eine Trennung durchzuführen. Dagegen spricht jedoch die Tatsache, dass es gerade kurz vor und hinter Ecken bei redundanten translatorisch wirksamen Achsen zu besonders heftigen Bewegungen der Zusatzachsen kommen kann und die Basisachsen keinesfalls gerade dort still stehen. Somit sind eher besonders beschleunigungsarme Zonen zum Übergang von Abschnitt zu Abschnitt geeignet, ähnlich wie schon von Splines bekannt.

Derartige beschleunigungsarme Zonen, insbesondere ihre Minimalwerte können leicht mittels einer Vorabsimulation bestimmt werden und, wenn sie einen bestimmten Minimalabstand zum Vorgänger und Nachfolger einhalten, als Grenzen von Abschnitten angesehen werden. Die sodann bestimmten Werte der "kritischeren" Abschnitte, also solche, die eine niedrigere Maximalgeschwindigkeit oder eine höhere Beschleunigung der Basisachsen erfordern, sind dann jeweils für einen ausreichenden Übergangsabschnitt, auch innerhalb des unkritischeren Nachbarabschnittes wirksam.

Insgesamt ergibt sich ein gegenüber dem bisherigen Stand der Technik zur gezielten Optimierung der Bewegungskoordination von Mess- oder Bearbeitungsmaschinen mit redundanten translatorisch wirksamen Achsen, insbesondere auch zur Minimierung der Belastung der Basisachsen bei relativ niedrigen Sollgeschwindigkeiten, eine erheblich verbesserte Effizienz der Bewegungen bei zugleich besonders niedrigem Rechenaufwand und weitgehend problemloser Kombinierbarkeit mit Verfahren, die andere Zielrichtungen bei der Optimierung der Bewegungskoordination verfolgen.

Besonders geeignet ist das Verfahren, um den Anwendungsbereich des Verfahrens entsprechend dem Aktenzeichen DE 10 2007 026 356.4 auf eine bahnspezifisch maximal mögliche Mess- oder Bearbeitungsgeschwindigkeit auszudehnen, womit auch entsprechend dem Aktenzeichen DE 10 2007 027 503.1, insbesondere der Ansprüche 12 und 15 ff. dort, sich der bahnspezifische Einsatzpunkt einer Beschleunigungsverminderung der Zusatzachsen, zu einer maximalen Geschwindigkeit hin verschieben lässt, wenn das vorliegende Verfahren als Vergleichsverfahren dient.

Wegen der einfachen technischen Umsetzbarkeit und hohen Effizienz, kann das Verfahren auch zur Erzielung einer höchstmöglichen weitgehend konstanten Bahngeschwindigkeit, mit nahezu jedem anderem Verfahren zur Optimierung der Bewegungskoordination von redundanten translatorisch wirksamen Achsen vorteilhaft kombiniert werden.

Sowohl die Art der anzusteuernden Basisachsen, als auch der Zusatzachsen kann mechanisch sehr vielfältig realisiert sein.

Für Basisachsen werden gewöhnlich Linearantriebe, Hohlwellenmotore, Zahnstangentriebe oder Kugelgewindespindeln zum Einsatz kommen, während für die Zusatzachsen, je nach benötigtem Bewegungsspielraum und Größendimension der Anwendung neben Linearantrieben und möglichst direkt angetriebenen Kugelgewindespindeln auch piezoelektrisch, elektrodynamisch ("voice coils"), hydraulisch oder pneumatisch wirksame Antriebe verwendbar sein können.

Genauso ist auch der Einsatz von um eine Achse drehbarer oder parallelkinematisch bewegbarer Maschinenteile als entsprechend linear wirkende Zusatzachse innerhalb eines engen Winkelbereiches möglich, wie beispielsweise schwenkbare Laserschneidköpfe oder parallelkinematisch bewegbare Fräsköpfe.

Eine Mess- und Werkzeugmaschine kann erfindungsgemäß beispielsweise für den Schiff- oder Flugzeugbau zum Vermessen und Bearbeiten größter Bauteile in höchster Detailkomplexität vorteilhaft konzipiert werden, oder für eher alltägliche Dimensionen beispielsweise in der Größe von Autokarosserien, Waschmaschinen oder Platinen für elektronische Schaltungen, bis hinunter in in die Dimensionen von Zentimetern oder Bruchteilen von Millimetern, für die Abmessungen eines zu vermessenden oder zu bearbeitenden Werkstückes in der Mikrosystemtechnik, Mikroelektronik oder der Nanotechnologie.

Bearbeitungsmethoden für die sich eine erfindungsgemäße Einrichtung oder Verfahren besonders eignet, sind das Schweißen, Schneiden, Fräsen, Gravieren, Markieren, Aufbringen von komplexen Konturen und Strukturen auf eher flachen Materialien, wie Blechen, Kunststoffen, Glas, Keramiken, Holz und Textilien.

Ebenso ist das Rapid Prototyping eine geeignete Anwendung, insbesondere Verfahren in denen Schichten zugeschnitten, Material kleinräumig aufgetragen wird oder mit einem möglichst senkrecht zum Material ausgerichteten Energiestrahl gearbeitet werden muss, beispielsweise um einen möglichst gleichmäßigen und exakt reproduzierbaren Energieeintrag zu erhalten.

Ferner sind das exakte Bearbeiten kleinster Strukturen oder das präzise Auf- und Abtragen feinster Details mit hoher Geschwindigkeit genauso mögliche Anwendungen der vorliegenden Erfindung, wie auch das Messen und Kontrollieren in den genannten Bereichen, wobei diese nur als Beispiele zu verstehen sind und keine in irgend einer Weise abschließende Aufzählung von Anwendungsmöglichkeiten der Erfindung darstellen sollen.

Bevorzugte Ausführungsbeispiele der Erfindung sind in der Zeichnung schematisch dargestellt und werden nachfolgend mit Bezug zu den Figuren der Zeichnung näher erläutert. Es zeigt:

Fig. 1    eine Werkzeugmaschine mit einem in zwei Achsrichtungen bewegbaren Werkzeug und einer Zusatzachse;

Fig. 2    eine Werkzeugmaschine mit fünf Achsrichtungen;

Fig. 3    eine stark schematisierte Darstellung einer Basisachse und Zusatzachse;

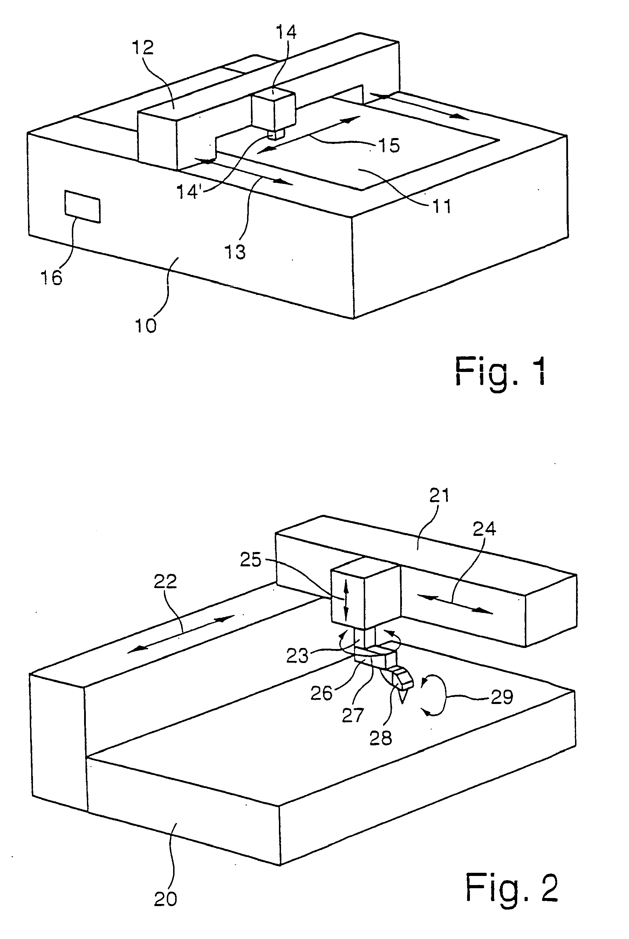

In der Fig. 1 ist eine Werkzeugmaschine 10 dargestellt, bei der ein Werkstück 11 ortsfest angeordnet ist. Ein Portal 12 ist entlang der Achsrichtung 13 bewegbar. An dem Portal 12 ist eine Einrichtung 14 angeordnet, an der wiederum ein Werkzeughalter 14' angeordnet ist, der ein Werkzeug halten kann. Die Einrichtung 14 (und damit der Werkzeughalter 14' samt Werkzeug) ist in Achsrichtung 15 bewegbar. Der Werkzeughalter 14' ist bezüglich der Einrichtung 14 ebenfalls in Achsrichtung 13 beweglich.

Aus der Fig. 1 ist ersichtlich, dass der Werkzeughalter 14' (mit Werkzeug) eine geringere Masse aufweist als die Einrichtung 14, die als Schlitten bezeichnet werden kann. Das Portal 12 mit zugehörigen Antrieben stellt eine erste in Ausrichtung 13 wirkende Teilachse dar und wird als Basisachse bezeichnet, während der Werkzeughalter 14' mit zugehörigem Antrieb eine in Achsrichtung 13 wirkende zweite Teilachse, die Zusatzachse, darstellt. Die Basisachse hat einen größeren Bewegungsbereich und geringere Beschleunigung als die Zusatzachse. Die Bewegungen in den Achsenrichtungen 13, 15 werden durch eine Steuerung 16 gesteuert.

In der Fig. 2 ist eine Werkzeugmaschine 20 dargestellt, bei der ein Arm 21 entlang der Achsrichtung 22 bewegbar ist. Entlang dem Arm 21 ist eine Einrichtung 23 in Achsrichtung 24 bewegbar. Die Einrichtung 23 ist zusätzlich in Achsrichtung 25 bewegbar. Durch die Achsrichtungen 22, 24, 25 werden die X-, Y-, Z-Richtung eines kartesischen Koordinatensystems festgelegt. Ein Ausleger 26 ist in Achsrichtung 27 rotierbar. An dem Ausleger 26 ist ein Laserschneidkopf 28 als Werkzeug angeordnet, der wiederum in Achsrichtung 29 rotierbar ist.

In einem geringen Bewegungsausschnitt ist die Bewegung des Laserschneidkopfes 28 im Wesentlichen parallel zur Achsrichtung 22, so dass eine Bewegung des Kopfes 28 in einem Bereich eine translatorische Bewegung parallel zur Bewegung des Armes 21 in Achsrichtung 22 bewirken kann und daher der Laserschneidkopf 28 samt seinem Antrieb als (translatorische) Zusatzachse betrachtet werden kann.

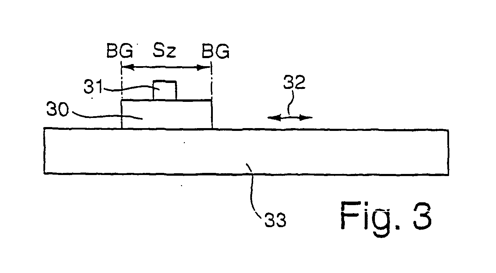

In der Figur 3 ist nochmals stark schematisiert ein Schlitten 30 gezeigt, der relativ zur Führung 33 bewegbar ist und eine Basisachse bzw. einen Bestandteil einer solchen darstellt. Darauf ist eine Einrichtung 31 angeordnet, die eine Zusatzachse bzw. einen Bestandteil einer solchen darstellt. Sowohl der Schlitten 30 als auch die Einrichtung 31 können in Doppelpfeilrichtung 32 beschleunigt werden. Dabei kann der Schlitten 30 relativ zu der Führung 33 mit der Beschleunigung Bb (Beschleunigung der Basisachse) und die Einrichtung 31 relativ zum Schlitten 30 mit der Beschleunigung Bz (Beschleunigung der Zusatzachse) beschleunigt werden. Die gestrichelten Linien BG stellen die Bereichsgrenzen des Bewegungsspielraums Sz der Zusatzachse dar.

**Patentansprüche**

1. Verfahren zur optimierten Bewegungskoordination von Mess- oder Werkzeugmaschinen (20) mit redundanten translatorisch wirksamen Achsen (15, 14, 22, 24, 25, 27, 29)
   wobei die redundanten translatorisch wirksamen Achsen, linear bewegbare Teile (14, 14') einer Gesamtbewegungsvorrichtung, zur mindestens zweidimensionalen Gesamtbewegung von Messeinrichtungen oder Werkzeugen, relativ zu einem mit beliebigen Verfahren abzutastenden oder zu bearbeitenden Mess- oder Bearbeitungsgut bilden,
   wobei als redundante translatorische Bewegungsmöglichkeit auch gelten kann, wenn rotatorisch oder parallelkinematisch wirkende Teilbewegungsvorrichtungen (23, 26, 28), innerhalb eines anwendungsabhängigen Bewegungsbereiches, für eine redundante translatorische Bewegung einer Messeinrichtung oder eines Werkzeuges genutzt werden können,
   wobei die jeweils über eine längere Strecke bewegbaren Teilachsen, hier Basisachsen (32) genannt, eine niedrig beschleunigte Teilbewegung über den gesamten Mess- oder Bearbeitungsraum, ermöglichen und die jeweils über eine kürzere Strecke bewegbaren Teilachsen, hier Zusatzachsen (52) genannt, die Bewegungsanteile einer Gesamtbewegung ausführen, die eine Beschleunigung jenseits eines für die Basisachsen festgestellten oder festgesetzten Maximums erfordern,
   wobei die Gesamtkoordination aller Achsen unmittelbar während eines Mess- oder Bearbeitungsvorganges stattfinden kann, oder in einer fließenden abschnittweisen Vorverarbeitung während eines Mess- oder Bearbeitungsvorganges, oder als Teil einer kompletten Vorverarbeitung eines gesamten Mess- oder Bearbeitungsvorganges,
   **dadurch gekennzeichnet, dass** eine möglichst hohe und konstant einzuhaltende Bewegungsgeschwindigkeit einer Messeinrichtung oder eines Werkzeuges gegenüber dem Mess- oder Bearbeitungsgut (Vmax), ohne Begrenzung der Beschleunigung der Zusatzachsen und Verletzung ihres Bewegungsspielraumes ermittelt wird,
   indem zunächst eine Simulation der Bearbeitungsbahn,
   oder eines allein zu berücksichtigenden Abschnittes hiervon,
   mit einer Referenzgeschwindigkeit (Vref) ausgeführt wird,
   und das durch besagte Simulation ermittelte Verhältnis der maximalen Auslenkung (Sz_ref_max) zur maximalen Auslenkbarkeit (Sz) im Zusammenhang mit der Referenzgeschwindigkeit (Vref) genutzt wird, um die Bewegungsgeschwindigkeit (Vmax) zu ermitteln.

2. Verfahren gemäß Anspruch 1,
   **dadurch gekennzeichnet, dass** besagte Referenzgeschwindigkeit (Vref),
   in der Größenordnung, der möglichst hohen und konstant einzuhaltenden Bewegungsgeschwindigkeit (Vmax) entspricht.

3. Verfahren gemäß Anspruch 1,
   **dadurch gekennzeichnet, dass** besagte Referenzgeschwindigkeit (Vref),
   zwischen SQRT(Sz * Bb / 4) und SQRT(Sz * Bb / 2) gewählt wird, wobei Bb für die maximale Beschleunigung der Basisachse und SQRT für Quadratwurzel steht.

4. Verfahren gemäß Ansprüchen 1 bis 3,
   **dadurch gekennzeichnet, dass** besagte möglichst hohe und konstant einzuhaltende Bewegungsgeschwindigkeit (Vmax) sich errechnet aus Vref * SQRT(Sz / Sz_ref_max).

5. Verfahren gemäß Ansprüchen 1 bis 4,
   **dadurch gekennzeichnet, dass** zunächst eine weitere Simulation mit

$$\text{Referenzgeschwindigkeit} = \text{Bewegungsgeschwindigkeit (Vref = Vmax)}$$

durchgeführt wird, und wenn die maximale Auslenkung (Sz_ref_max), außerhalb einer definierbaren Toleranz größer oder kleiner als die maximale Auslenkbarkeit (Sz) ist, der Wert der Bewegungsgeschwindigkeit (Vmax) entsprechend korrigiert wird.

**6.** Verfahren gemäß Anspruch 5,
**dadurch gekennzeichnet, dass** bei Veränderung der Bewegungsgeschwindigkeit (Vmax) eine weitere Kontrollsimulation zum Vergleich der maximalen Auslenkung (Sz_ref_max) und der maximalen Auslenkbarkeit (Sz) stattfindet.

**7.** Verfahren gemäß einem der vorhergehenden Ansprüche,
**dadurch gekennzeichnet, dass** die Simulation und Ausführung vorzugsweise derart erfolgt, dass die Trennung der Bewegungsanteile der Basis- und Zusatzachsen, anhand der jeweilig sich lokal ergebenden Beschleunigung stattfindet, indem die Zusatzachse nur den Bewegungsanteil ausführt, den die Basisachse aufgrund ihrer maximalen Beschleunigung nicht auszuführen in der Lage wäre.

**8.** Verfahren gemäß einem der vorhergehenden Ansprüche,
**dadurch gekennzeichnet, dass** die sich aus der jeweils letzten Simulation ergebende Bewegung der beteiligten Achsen in ihrem jeweiligen Verlauf abgespeichert werden, derart, dass die ermittelten Bewegungsanteile von mindestens zwei der drei Bewegungsabläufe der Basis- oder Zusatzachsen oder der Gesamtbewegung, abrufbar bleiben, so dass sich hiermit die derart erzeugte Bewegungsaufteilung zwischen Basisachsen und Zusatzachsen unabhängig von der jeweilig zur Ausführung gewählten Geschwindigkeit ergibt.

**9.** Verfahren gemäß Anspruch 8,
**dadurch gekennzeichnet, dass** das Abspeichern des Verlaufes in einer zeitlichen Rasterung oder in einem Raster entlang der Bewegungsbahn erfolgt.

**10.** Verfahren gemäß Ansprüchen 1 bis 7,
**dadurch gekennzeichnet, dass** durch das Verhältnis einer geplanten Sollgeschwindigkeit (Vsoll) zur ermittelten Maximalgeschwindigkeit (Vmax) und der für die Maximalgeschwindigkeit verwendeten Beschleunigung der Basisachsen (Bbmax), eine minimal notwendige Maximalbeschleunigung der Basisachsen (Bbsoll) ermittelt wird.

**11.** Verfahren gemäß Anspruch 10,
**dadurch gekennzeichnet, dass** die minimal notwendige Maximalbeschleunigung der Basisachsen (Bbsoll) sich errechnet aus $Bbmax * Vsoll^2 / Vmax^2$.

**12.** Verfahren gemäß Anspruch 10 oder 11,
**dadurch gekennzeichnet, dass** vor der Ausführung eine weitere Simulation mit der geplanten Sollgeschwindigkeit (Vsoll) und maximale Beschleunigung der Basisachse = minimal notwendige Maximalbeschleunigung der Basisachsen (Bb = Bbsoll) durchgeführt wird, und wenn die maximale Auslenkung (Sz_ref_max), außerhalb einer definierbaren Toleranz größer oder kleiner als die maximale Auslenkbarkeit (Sz) ist, der Wert der minimal notwendigen Maximalbeschleunigung der Basisachsen (Bbsoll) entsprechend korrigiert wird.

**13.** Verfahren gemäß Anspruch 12,
**dadurch gekennzeichnet, dass** bei Veränderung der minimal notwendigen Maximalbeschleunigung der Basisachsen (Bbsoll) eine weitere Kontrollsimulation zum Vergleich der maximalen Auslenkung (Sz_ref_max) und der maximalen Auslenkbarkeit (Sz) stattfindet.

**14.** Verfahren gemäß einem der vorhergehenden Ansprüche,
**dadurch gekennzeichnet, dass** es als Vergleichs-, Ergänzungs- oder Alternativverfahren mit oder im Rahmen eines anderen Verfahrens zur Optimierung der Bewegungskoordination bei translatorisch wirksamen Achsen verwendet wird.

**Claims**

**1.** A method for the optimised movement co-ordination of measuring machines or machine tools (20) having redundant axes (15, 14, 22, 24, 25, 27, 29) having a translatory action,
wherein the redundant axes having a translatory action form linearly movable parts (14, 14') of a total movement device, for at least two-dimensional total movement of measuring devices or tools relative to a material to be scanned or to be processed with any desired methods,
wherein a possible redundant translatory movement is also considered to be when rotatory or parallel kinematically acting partial movement devices (23, 26, 28), within an application-dependent movement range, can be used for a redundant translatory movement of a measuring device or a tool,

wherein the partial axes each movable over a relatively long distance, called base axes (32) here, permit a slowly accelerated partial movement across the entire measuring or processing space, and the partial axes each movable over a relatively short distance, called additional axes (Sz) here, perform the movement components of a total movement that require an acceleration beyond a maximum established or stipulated for the base axes,

wherein the overall co-ordination of all axes can take place directly during a measuring or processing operation, or in a smooth section-wise pre-processing during a measuring or processing operation, or as part of a complete pre-processing of an entire measuring or processing operation,

**characterised in that** a maximum movement speed to be maintained constant of a measuring device or a tool with respect to the material to be measured or processed (Vmax), without limiting the acceleration of the additional axes and breaching their movement range, is determined,

by first performing a simulation of the processing path, or a section thereof to be considered on its own, at a reference speed (Vref),

and using the ratio of the maximum displacement (Sz_ref_max) to the maximum displaceability (Sz) determined by said simulation in conjunction with the reference speed (Vref) to determine the movement speed (Vmax).

2. A method according to claim 1,
**characterised in that** the said reference speed (Vref), in order of magnitude, corresponds to the highest possible movement speed (Vmax) to be held constant.

3. A method according to claim 1,
**characterised in that** the said reference speed (Vref) is selected to be between SQRT(Sz * Bb/4) and SQRT(Sz * Bb/2), Bb standing for the maximum acceleration of the base axis and SQRT standing for square root.

4. A method according to any one of claims 1 to 3,
**characterised in that** the said highest possible movement speed (Vmax) to be held constant is calculated from Vref*SQRT(Sz/Sz_ref_max).

5. A method according to any one of claims 1 to 4,
**characterised in that** firstly a further simulation at reference speed = movement speed (Vref = Vmax) is performed, and when the maximum displacement (Sz_ref_max) outside a definable tolerance is greater or smaller than the maximum possible deflection (Sz), the value of the movement speed (Vref) is correspondingly corrected.

6. A method according to claim 5,
**characterised in that** on change of the movement speed (Vmax) a further control simulation takes place to compare the maximum displacement (Sz_ref_max) and the maximum possible displaceability (Sz).

7. A method according to any one of the preceding claims,
**characterised in that** the simulation and implementation are preferably carried out in such a way that the separation of the movement components of the base and additional axes, by means of which locally arising acceleration occurs, is effected by the additional axis performing only the movement component that the base axis would not be able to perform by virtue of its maximum acceleration.

8. A method according to any one of the preceding claims,
**characterised in that** the movement of the participating axes on their respective paths resulting from the last simulation each time are stored in such a way that the determined movement components of at least two of the three movement sequences of the base or additional axes or of the total movement remain retrievable, so that the distribution of movement generated in this way between base axes and additional axes hereby ensues independently of the speed selected respectively for implementation.

9. A method according to claim 8,
**characterised in that** storage of the path is effected time-resolved or in a grid pattern along the movement path.

10. A method according to any one of claims 1 to 7,
**characterised in that** a minimum necessary maximum acceleration of the base axes (Bbdesired) is determined by the ratio of a planned desired speed (Vdesired) to the determined maximum speed (Vmax) and the acceleration of the base axes (Bbmax) used for the maximum speed.

**11.** A method according to claim 10,
**characterised in that** the minimum necessary maximum acceleration of the base axes (Bbdesired) is calculated from Bbmax * Vdesired$^2$ / Vmax$^2$.

**12.** A method according to claim 10 or 11,
**characterised in that**, before the implementation, a further simulation at the planned desired speed (Vdesired) and maximum acceleration of the base axis = minimum necessary maximum acceleration of the base axes (Bb = Bbdesired) is performed, and when the maximum displacement (Sz_ref_max) outside a definable tolerance is larger or smaller than the maximum displaceability (Sz), the value of the minimum necessary maximum acceleration of the base axes (Bbdesired) is correspondingly corrected.

**13.** A method according to claim 12,
**characterised in that** on change of the minimum necessary maximum acceleration of the base axes (Bbdesired) a further control simulation takes place to compare the maximum displacement (Sz_ref_max) and the maximum displaceability (Sz).

**14.** A method according to any one of the preceding claims,
**characterised in that** it is used as a comparative, supplementary or alternative method with or within the scope of a different method for optimising the movement co-ordinates of axes having a translatory action.

## Revendications

**1.** Procédé de coordination optimalisée des mouvements de machines de mesure ou de machines-outils (20) à axes redondants (15, 14, 22, 24, 25, 27, 29) opérant en translation,
lesdits axes redondants, opérant en translation, matérialisant des parties (14, 14') linéairement mobiles d'un dispositif de mouvement intégral affecté au mouvement intégral, au moins bidimensionnel, de systèmes de mesure ou d'outils par rapport à un objet mesuré ou travaillé, devant être exploré ou usiné par de quelconques procédés,
une faculté redondante de mouvement translatoire pouvant également être réputée offerte lorsque des dispositifs (23, 26, 28) de mouvement partiel, agissant en mode rotatif ou avec cinématique parallèle, peuvent être utilisés dans les limites d'une plage de mouvements tributaire de l'application, en vue d'un mouvement translatoire redondant d'un système de mesure ou d'un outil,
les axes partiels désignés par « axes fondamentaux » (32) dans le présent contexte, respectivement mobiles sur un trajet de longueur supérieure, autorisant un mouvement partiel à faible accélération sur la totalité de l'espace de mesure ou d'usinage ; et les axes partiels désignés par « axes additionnels » (Sz) dans le présent contexte, respectivement mobiles sur un trajet de longueur moindre, exécutant les fractions d'un mouvement intégral qui réclament une accélération au-delà d'un maximum fermement établi ou fermement instauré pour lesdits axes fondamentaux,
la coordination d'ensemble de tous les axes pouvant avoir lieu directement au cours d'un processus de mesurage ou d'usinage ; ou lors d'un traitement préalable continu et segmenté, au cours d'un processus de mesurage ou d'usinage ; voire en tant que partie d'un traitement préalable intégral d'un processus global de mesurage ou d'usinage, **caractérisé par le fait qu'**une vitesse de mouvement (Vmax) d'un système de mesure ou d'un outil par rapport à l'objet mesuré ou usiné, la plus élevée possible et devant être maintenue constante, est déterminée sans limitation de l'accélération des axes additionnels, et sans dégradation de leur latitude de mouvement,
en effectuant tout d'abord une simulation de la trajectoire d'usinage
ou d'un segment de cette dernière devant uniquement être pris en compte,
avec une vitesse de référence (Vref),
puis en utilisant le rapport résultant de ladite simulation et existant entre l'excursion maximale (Sz_ref_max) et la faculté d'excursion maximale (Sz), en corrélation avec ladite vitesse de référence (Vref), en vue de déterminer ladite vitesse de mouvement (Vmax).

**2.** Procédé selon la revendication 1,
**caractérisé par le fait que** l'ordre de grandeur de la vitesse de référence (Vref) précitée correspond à la vitesse de mouvement (Vmax) la plus élevée possible et devant être maintenue constante.

**3.** Procédé selon la revendication 1,
**caractérisé par le fait que** la vitesse de référence (Vref) précitée est sélectionnée entre SQRT (Sz * Bb/4) et SQRT (Sz * Bb/2), Bb représentant l'accélération maximale de l'axe fondamental, et SQRT exprimant la racine carrée.

**4.** Procédé selon les revendications 1 à 3,
**caractérisé par le fait que** la vitesse de mouvement (Vmax) précitée, la plus élevée possible et devant être maintenue constante, découle du calcul Vref * SQRT (Sz / Sz_ref_max).

**5.** Procédé selon les revendications 1 à 4,
**caractérisé par le fait qu'**il est tout d'abord effectué une simulation supplémentaire avec la vitesse de référence = la vitesse de mouvement (Vref = Vmax) et, lorsque l'excursion maximale (Sz_ref_max) est supérieure ou inférieure à la faculté d'excursion maximale (Sz) en dehors d'une tolérance pouvant être bien définie, la valeur de ladite vitesse de mouvement (Vmax) est corrigée de façon correspondante.

**6.** Procédé selon la revendication 5,
**caractérisé par le fait qu'**une simulation supplémentaire de contrôle est effectuée, en cas de variation de la vitesse de mouvement (Vmax), en vue de la comparaison de l'excursion maximale (Sz_ref_max) et de la faculté d'excursion maximale (Sz).

**7.** Procédé selon l'une des revendications précédentes,
**caractérisé par le fait que** la simulation et l'exécution s'opèrent, de préférence, de façon telle que la séparation des fractions de mouvement des axes fondamental et additionnel ait lieu à l'appui de l'accélération considérée résultant localement, en ce sens que l'axe additionnel exécute uniquement la fraction de mouvement que l'axe fondamental ne serait pas en mesure d'exécuter du fait de son accélération maximale.

**8.** Procédé selon l'une des revendications précédentes,
**caractérisé par le fait que** l'allure respective du mouvement des axes concernés, résultant de la dernière simulation considérée, est mémorisée de telle manière qu'il demeure possible d'interroger les fractions de mouvement déterminées d'au moins deux, parmi les trois processus moteurs des axes fondamentaux ou additionnels, ou du mouvement intégral, de sorte que le clivage des mouvements entre lesdits axes fondamentaux et lesdits axes additionnels, ainsi généré, est obtenu indépendamment de la vitesse respectivement sélectionnée pour l'exécution.

**9.** Procédé selon la revendication 8,
**caractérisé par le fait que** la mémorisation de l'allure s'effectue dans un chronographe quadrillé ou dans un réseau tramé, le long de la trajectoire de mouvement.

**10.** Procédé selon les revendications 1 à 7,
**caractérisé par le fait qu'**une accélération maximale (Bbsoll) des axes fondamentaux, nécessaire au minimum, est déterminée par le biais du rapport d'une vitesse de consigne programmée (Vsoll) vis-à-vis de la vitesse maximale établie (Vmax), et de l'accélération (Bbmax) desdits axes fondamentaux qui est utilisée pour ladite vitesse maximale.

**11.** Procédé selon la revendication 10,
**caractérisé par le fait que** l'accélération maximale (Bbsoll) des axes fondamentaux, nécessaire au minimum, découle du calcul Bbmax * Vsoll$^2$ / Vmax$^2$.

**12.** Procédé selon la revendication 10 ou 11,
**caractérisé par le fait qu'**une simulation supplémentaire est effectuée, préalablement à l'exécution, avec la vitesse de consigne programmée (Vsoll) et avec l'accélération maximale de l'axe fondamental = l'accélération maximale des axes fondamentaux nécessaire au minimum (Bb = Bbsoll) ; et, lorsque l'excursion maximale (Sz_ref_max) est supérieure ou inférieure à la faculté d'excursion maximale (Sz) en dehors d'une tolérance pouvant être bien définie, la valeur de ladite accélération maximale (Bbsoll) desdits axes fondamentaux, nécessaire au minimum, est corrigée de façon correspondante.

**13.** Procédé selon la revendication 12,
**caractérisé par le fait qu'**une simulation supplémentaire de contrôle est effectuée en cas de variation de l'accélération maximale (Bbsoll) des axes fondamentaux, nécessaire au minimum, en vue de la comparaison de l'excursion maximale (Sz_ref_max) et de la faculté d'excursion maximale (Sz).

**14.** Procédé selon l'une des revendications précédentes,
**caractérisé par le fait qu'**il est mis en oeuvre sous la forme d'un procédé comparatif, complémentaire ou alternatif, en association avec un autre procédé d'optimisation de la coordination des mouvements en présence d'axes opérant en translation, ou dans le cadre dudit procédé.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 594699 B1, Ehlerding
- WO 200675209 A2, Gattiglio
- WO 9629634 A1, Cutler
- EP 1294544 B1, Sartorio
- EP 1758003 A1, Cardinale
- DE 102005061570 A1, Hoffmann
- EP 0594699 B1
- DE 102007026356
- DE 102007027503